# FASCICULE DE BREVET EUROPEEN

(11) **EP 3 119 182 B1**
(45) Date de publication et mention de la délivrance du brevet: **15.05.2019**
(21) Numéro de dépôt: 15715347.9
(22) Date de dépôt: 18.03.2015
(51) Int. Cl.: A01D 27/00

(54) **MACHINE DE RÉCOLTE DE RACINES COMME DES BETTERAVES, COMPORTANT UN MOYEN D'AJUSTEMENT AUTOMATIQUE DE L'UNITÉ DE RÉCOLTE**
MASCHINE ZUR ERNTE VON WURZELN WIE RÜBEN MIT VORRICHTUNG ZUR AUTOMATISCHEN EINSTELLUNG DER ERNTEEINHEIT
MACHINE FOR HARVESTING ROOTS SUCH AS BEETS, HAVING A MEANS FOR AUTOMATIC ADJUSTMENT OF THE HARVESTING UNIT

(30) Priorité: 18.03.2014 FR 1452198
(43) Date de publication de la demande: 25.01.2017
(73) Titulaire: Exel Industries, 75009 Paris (FR)
(72) Inventeur: RAMSAUER, Josef, 84069 Schierling (DE); RICHER, Eduard, 93095 Hagelstadt (DE); GALLMEIER, Michael, 84061 Ergoldsbach (DE)
(74) Mandataire: Lavoix
(86) Numéro de dépôt international: PCT/FR2015/050666
(87) Numéro de publication internationale: WO 2015/140471

(56) Documents cités:
- EP-A1- 1 772 050
- DE-A1- 19 848 484
- DE-A1-102011 051 672
- FR-A1- 2 800 233

## Description

La présente invention concerne une machine de récolte de racines plantées en terre suivant des rangs, comme des betteraves, ainsi qu'un procédé de récolte prévu pour une telle machine.

Pour récolter des alignements de racines alignées suivant des rangs longitudinaux, lorsqu'elles arrivent à maturité, en particulier pour la récolte des betteraves à sucre, un type de machine connu, présenté notamment par le document EP-B1-1772050, comporte un ensemble disposé à l'avant d'un tracteur motorisé, comprenant successivement en partant de l'avant, des roues de guidage, une unité d'effeuillage de l'essentiel des feuilles, une unité de coupe horizontale de la tête des betteraves pour éliminer les feuilles restantes et scalper la betterave, et une unité de récolte qui creuse la terre en dessous des betteraves pour les extraire, éliminer la terre, et les faire remonter vers un moyen de stockage.

Dans la suite de ce document, le terme betterave englobera tous types de racines qui peuvent être récoltées avec ces machines.

L'unité de coupe de la tête des betteraves comporte pour chaque rang une lame de coupe horizontale, comprenant juste en avant un guide en hauteur ou came, présentant des barres parallèles formant une courbe remontant vers l'avant de manière à glisser sur le sommet de la betterave à couper, qui se termine vers l'arrière un peu au-dessus de la lame.

Pour chaque rang de betteraves, l'unité de coupe est montée sur un support sensiblement équilibré qui permet une montée et une descente du guide prenant appui successivement sur le dessus de chacune des betteraves. De cette manière, la lame suivant derrière étant ajustée un peu en dessous de ce guide, coupe horizontalement la betterave juste en-dessous de son sommet.

L'unité de récolte suivant cette unité de coupe, comporte aussi un positionnement en hauteur lié au niveau de la lame de coupe, de manière à creuser le sol suivant une hauteur prédéfinie par rapport au niveau de coupe. On obtient ainsi une optimisation de la profondeur de creusement du sol, pour des betteraves comportant une hauteur standard.

Toutefois ce type d'ajustement automatique du niveau de l'unité de récolte n'est pas optimisé dans tous les cas. En particulier si les betteraves sont plus petites avec une hauteur réduite, ou s'il y a une absence de betterave, on creusera trop profondément ou inutilement la terre, avec une consommation de carburant trop forte pour motoriser la machine. À l'inverse si les betteraves sont plus grosses avec une hauteur plus importante, on risque alors d'endommager leurs bases et de perdre une partie de la récolte car on n'aura pas creusé assez profondément.

La présente invention a notamment pour but d'éviter ces inconvénients de la technique antérieure.

Elle propose à cet effet une machine de récolte de racines plantées en terre et alignées suivant des rangs, comprenant une unité de coupe horizontale de la tête des racines disposant d'un moyen d'ajustement automatique du niveau de sa lame de coupe en fonction du niveau de cette tête, qui est suivie d'une unité de récolte creusant la terre en dessous des racines à une hauteur relative en dessous du niveau de coupe, caractérisée en ce qu'elle comporte un moyen de détection de la hauteur du sommet de la racine et un moyen d'ajustement de la hauteur relative de l'unité de récolte par rapport au niveau de coupe en fonction de cette hauteur.

Un avantage de cette machine de récolte est qu'en fonction de la hauteur du sommet de la racine indiquée par le moyen de détection de la hauteur, on peut ajuster alors l'unité de récolte à la profondeur juste nécessaire. On assure ainsi un creusement optimum du sol qui permet de diminuer la consommation de carburant en creusant moins profondément quand la betterave est haute, et on réduit les risques d'endommagement des racines en creusant plus profondément quand la betterave est profonde.

La machine de récolte des racines selon l'invention peut comporter de plus une ou plusieurs des caractéristiques suivantes, qui peuvent être combinées entre elles.

Avantageusement, le moyen de détection détecte, en plus de la hauteur du sommet de la racine, la durée de passage d'un guide de coupe sur ce sommet, le moyen d'ajustement permettant d'ajuster la hauteur relative de l'unité de récolte par rapport au niveau de coupe en fonction de cette hauteur et de cette durée de passage sur le sommet.

Un avantage d'une telle machine de récolte est qu'en fonction de la hauteur du sommet de la racine indiquée par le moyen de détection de la hauteur, et de la taille indiquée par la durée de passage, prolongée quand ces racines sont plus grosses et réduite quand elles sont plus petites, on peut en déduire facilement des indications sur leur dimension et ajuster alors de manière optimisée l'unité de récolte à la profondeur juste nécessaire. On assure ainsi un creusement optimum du sol qui permet de diminuer la consommation de carburant en creusant moins profondément quand la betterave est haute, et on réduit les risques d'endommagement des racines en creusant plus profondément quand la betterave est profonde.

Avantageusement, le moyen de détection de la durée de passage sur le sommet de la racine comporte un moyen qui détecte l'effort ou la déformation du support de la lame de coupe de l'unité de coupe, qui est flexible. Ce type de capteur donne de manière simple l'indication de la durée de passage de la tête de coupe sur chaque racine.

Dans ce cas, la lame de l'unité de coupe peut être montée sur un parallélogramme, donnant pendant le passage du guide de coupe sur la racine un mouvement de ce parallélogramme qui est mesuré par un capteur d'angle. Pendant la durée de montée du parallélogramme, on repère ainsi à la fois la hauteur de la betterave et la taille du sommet de la betterave.

Avantageusement, le moyen d'ajustement de la hauteur relative de l'unité de récolte comporte un vérin hydraulique piloté par une unité de contrôle électronique. Les vérins hydrauliques développant des forces importantes, permettent des accélérations élevées donnant une bonne dynamique.

Avantageusement, la machine de récolte comporte un dispositif permettant au conducteur de prédéfinir pour chaque rang un niveau moyen de l'unité de récolte avant son ajustage automatique par le moyen d'ajustement. La course à accomplir pour l'ajustement de la hauteur relative de l'unité de récolte est ainsi en moyenne réduite.

Avantageusement, chaque unité de récolte comporte un capteur de hauteur. On peut ainsi ajuster sa hauteur par une régulation en boucle fermée.

L'invention a aussi pour objet un procédé de fonctionnement d'une machine de récolte de racines plantées en terre et alignées suivant des rangs, comprenant une unité de coupe horizontale de la tête des racines disposant d'un moyen d'ajustement automatique du niveau de sa lame de coupe en fonction du niveau de cette tête, qui est suivie d'une unité de récolte creusant la terre en dessous des racines à une hauteur relative en dessous du niveau de coupe, ce procédé réalisant une détection de la hauteur du sommet de la racine, puis un ajustement de la hauteur relative de l'unité de récolte par rapport au niveau de coupe, en fonction de cette hauteur.

Avantageusement, le procédé comporte une étape de détection de la durée de passage sur la racine par l'unité de coupe, la hauteur relative de l'unité de récolte par rapport au niveau de coupe étant ajustée en fonction de cette durée de passage sur la racine.

Avantageusement, le procédé de fonctionnement comporte une étape préliminaire de prédéfinition du niveau moyen de l'unité de récolte.

Avantageusement, à partir de la hauteur relative moyenne, pour une durée de passage sur la racine importante le procédé de fonctionnement augmente cette hauteur relative, pour une durée moyenne il conserve cette hauteur relative, et pour une durée faible il réduit cette hauteur relative.

Avantageusement, en l'absence de racine détectée, le procédé de fonctionnement met la hauteur relative au minimum.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue en coupe longitudinale d'une betterave plantée dans le sol, prête pour la récolte ;
- les figures 2a, 2b et 2c sont des vues en coupe transversale de six rangs de betteraves correspondant à la largeur de coupe d'une machine de récolte ;
- la figure 3 est une vue de côté d'une machine de récolte selon un mode de réalisation de l'invention;
- la figure 4 est une vue transversale des unités de récolte de cette machine ;
- la figure 5 présente le fonctionnement de cette machine sur une vue en coupe longitudinale d'un rang de betteraves ;
- la figure 6 présente sur la même vue en coupe, le gain en profondeur de creusement apporté par la machine de récolte ; et
- la figure 7 présente une vue en coupe longitudinale d'un rang de betteraves selon un autre mode de réalisation.

Il est à noter que les schémas et explications suivants sont basés sur une machine de récolte à six rangs. L'invention s'applique de la même manière aux machines de récolte adaptées à un nombre de rangs inférieur ou supérieur. En particulier, plus le nombre de rangs arrachés est élevé, plus les bénéfices liés à l'invention seront importants. En effet, les inégalités du terrain et des betteraves sont plus grandes sur huit, neuf ou douze rangs que sur six. Une optimisation de la profondeur du niveau de récolte de chaque rang entraînera donc un bénéfice accru.

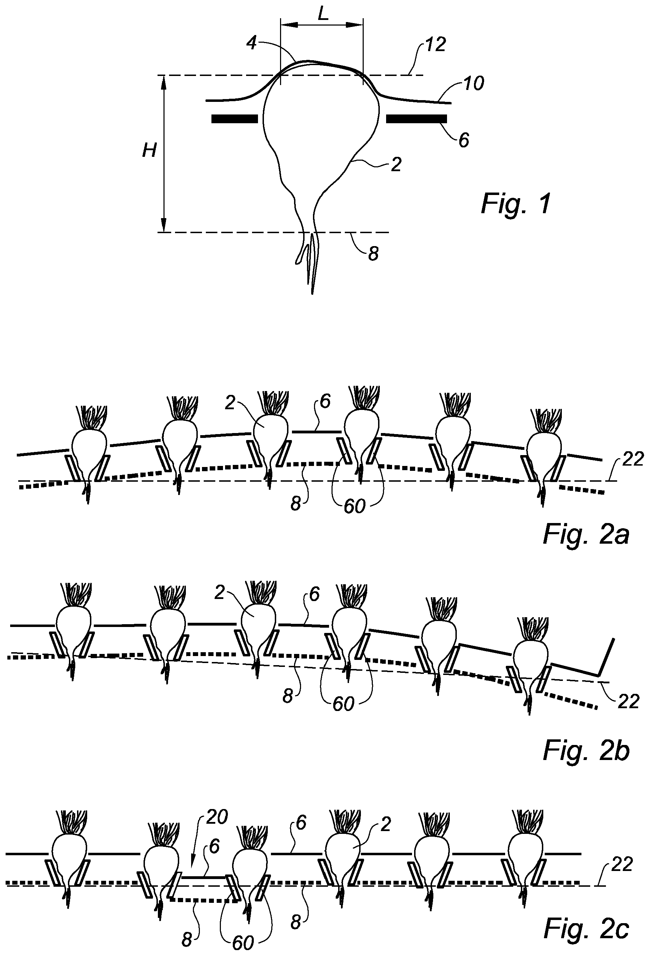

La figure 1 présente une betterave 2 enterrée dans le sol comportant un niveau de surface 6, qui arrivée à maturité doit être récoltée.

Pour la récolte, le dessus de la betterave 2 doit d'abord être coupé horizontalement suivant le niveau de coupe 12 situé un peu en dessous de son sommet 4, afin d'éliminer les feuilles poussant sur cette betterave. La coupe du sommet de la betterave 4 laisse alors un plan de coupe de largeur L, qui dépend de la grosseur de cette betterave.

La machine de récolte selon l'art antérieur, comportant un moyen d'ajustement automatique du niveau de coupe, dispose d'un guide en avant de la lame de coupe qui suit le contour supérieur des betteraves 2 en avançant, afin d'obtenir le placement de la lame au bon niveau de coupe 12.

Le niveau de récolte situé dans le sol 8 représente le niveau idéal de creusement du sol pour récolter la betterave 2, en venant juste en dessous de son volume principal. Un creusement trop profond consomme inutilement une énergie plus importante pour motoriser la machine de récolte, et entraîne trop de terre avec les betteraves 2, alors qu'un creusement pas assez profond risque d'endommager ces betteraves.

On obtient alors pour chaque betterave une hauteur relative H comprise entre le plan de coupe 12 et le niveau de récolte 8, qui peut varier à l'intérieur d'un même rang en fonction de nombreux paramètres, comprenant notamment la qualité locale du sol, le degré d'humidité, l'espace longitudinal entre deux betteraves, le degré d'enfouissement de cette betterave, et le rendement propre pour chacune des betteraves.

Les figures 2a, 2b et 2c présentent différentes déformations possibles du champ de culture qui se prolongent longitudinalement sur l'ensemble de ce champ, sur six rangs de betteraves qui sont récoltés en même temps.

La droite 22 représente l'inclinaison globale de la machine de récolte, la courbe supérieure 6 le niveau de la surface du sol, et la courbe inférieure 8 le niveau de récolte souhaité réglé individuellement par rang, correspondant à la base de lames latérales 60 de l'unité de récolte venant creuser la terre juste sous chaque betterave.

La figure 2a présente une section transversale de la surface du sol 6 qui est bombée, le niveau de récolte 8 des rangs deux à cinq doit être relevé.

La figure 2b présente une section transversale de la surface du sol 6 qui retombe sur le côté droit, par exemple en bordure d'un champ, la machine de récolte étant inclinée. Le niveau de récolte 8 des rangs deux à quatre doit être remonté, celui du rang six abaissé.

La figure 2c présente une section transversale de la surface du sol 6 comprenant un espace 20 entre les rangs deux et trois qui a été tassé par le passage d'un engin, formant un rail. Le niveau de récolte 8 des rangs deux et trois doit être abaissé.

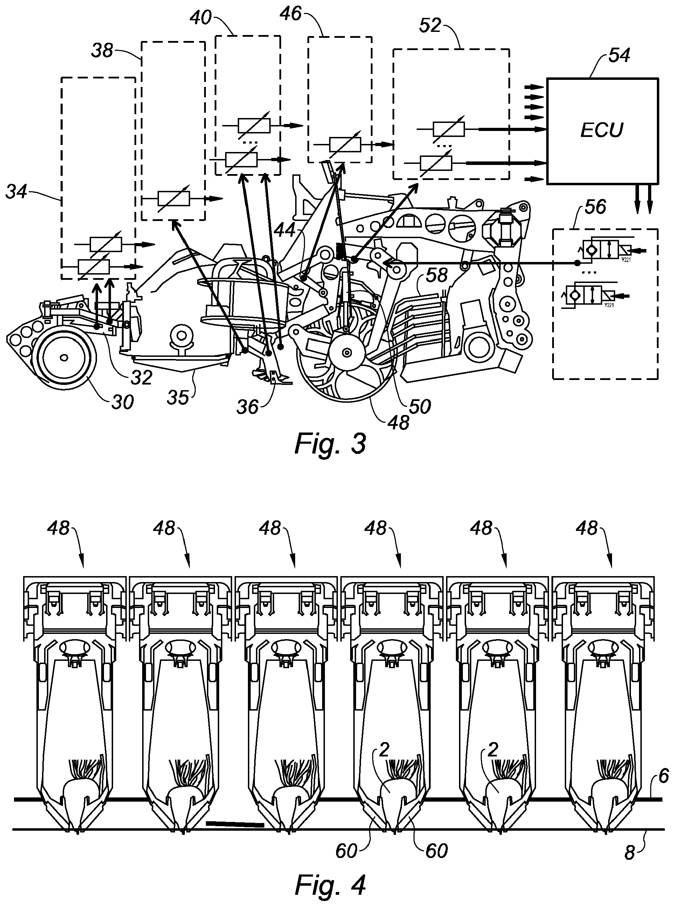

La figure 3 présente une machine de récolte comportant à l'avant deux roues de guidage 30 indépendantes prévues pour suivre les rangs de betteraves, qui sont reliées à l'ensemble de la machine par des bras articulés 32 disposant chacun d'un capteur de position 34 envoyant un signal à l'unité de contrôle électronique 54.

Les roues de guidage 30 permettent de déterminer la droite 22 représentant l'inclinaison globale de la machine de récolte, les niveaux de récolte individuels de chaque rang 8 étant déterminés par rapport à cette droite.

On a ensuite une unité d'effeuillage 35 qui enlève l'essentiel des feuilles des betteraves.

On a ensuite six unités indépendantes de coupe de tête des betteraves 36 alignées transversalement, comprenant chacune en amont de la lame de coupe horizontale un moyen de guidage courbé vers l'avant venant glisser sur le sommet de chaque betterave, afin d'ajuster la hauteur de cette lame située juste en arrière.

La hauteur prédéfinie de l'unité de coupe 36, est mesurée par un capteur 38.

Chaque unité de coupe 36 comprend un guide et une lame de coupe montés sur un parallélogramme déformable muni d'un capteur d'angle 40, qui permet de mesurer la hauteur relative du guide lors de son passage sur la betterave 2, et donc la hauteur du sommet 4 de cette betterave. Ce capteur d'angle 40 permet également de mesurer la durée pendant laquelle le guide et la lame de coupe sont soulevés, ce qui permet d'en déduire la taille de la betterave 2.

Les informations de hauteur de l'unité de coupe 36 et de déformation du parallélogramme 40 sont envoyées à l'unité de contrôle électronique 54. On obtient ainsi dans le temps une succession de signaux donnant, en connaissant la vitesse d'avance de la machine de récolte, l'indication de la largeur de chaque betterave en mesurant grâce au capteur d'angle 40, la durée de montée du parallélogramme, et l'indication de la hauteur du sommet de la betterave 4 à partir de l'inclinaison de ce parallélogramme.

On a derrière chaque unité de coupe des betteraves 36, une unité de récolte 48 comprenant une roue présentant de chaque côté la succession de lames 60 qui viennent creuser la terre juste en dessous de chaque betterave afin de les arracher, et de les renvoyer vers l'arrière où elles sont reprises par un système de remonté 58.

Les six unités de récolte 48 ont chacune un niveau moyen prédéfini par rapport à la machine de récolte, réglé par un vérin 44 en fonction de la position de l'effeuilleuse 35.

Pour chaque rang de betteraves le conducteur peut prédéfinir en fonction de l'état global de la surface du sol 6 de ce rang, comme présenté par les figures 2a, 2b et 2c, le niveau moyen de chaque unité de récolte 48. Chaque unité de récolte 48 dispose de plus d'un vérin hydraulique indépendant 50 de modification de sa hauteur par rapport à sa hauteur moyenne prédéfinie, venant ajouter ou retrancher une petite valeur pour donner une hauteur relative ajustable H, qui est piloté par des vannes hydrauliques 56 commandées par l'unité de contrôle électronique 54.

En fonction de toutes les informations reçues, en particulier celles données par le capteur d'angle 40 indiquant la durée et la hauteur, l'unité de contrôle électronique 54 réagit de manière très rapide pour ajuster précisément la hauteur relative H, afin d'obtenir le bon niveau de récolte 8 adaptée à chaque betterave 2 qui vient d'être coupée.

En variante la détection de coupe de la betterave peut comporter un moyen de mesure différent, comme un capteur de pression ou d'effort, un palpeur physique, un scanner en plusieurs dimensions ou une caméra trois dimensions.

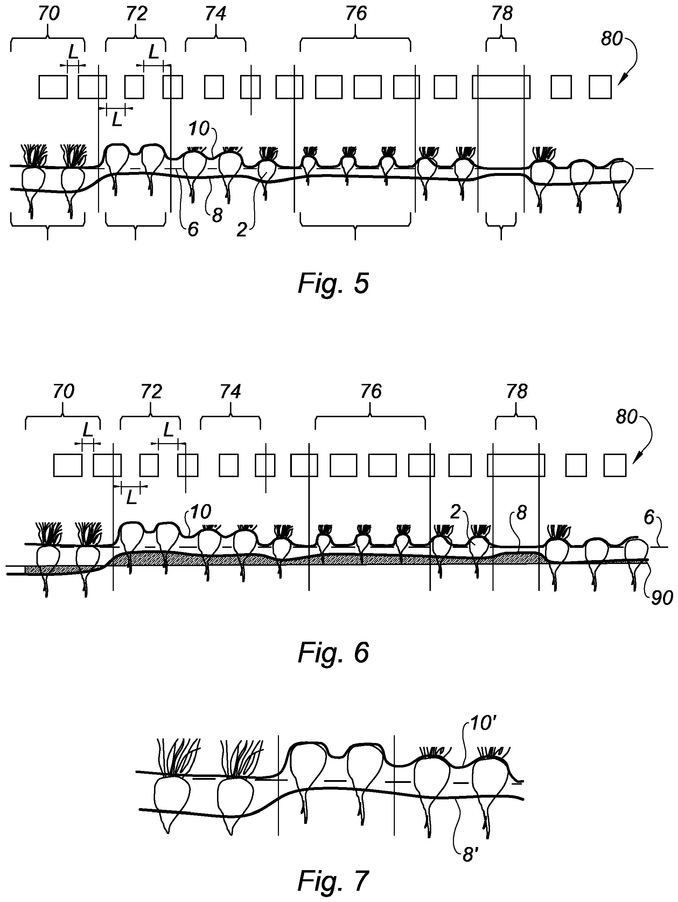

La figure 5 présente la courbe de niveau de coupe 10 donnée par le capteur d'angle 40, et le signal 80 envoyé par ce capteur, comprenant des rectangles indiquant l'absence de levée du parallélogramme tenant la lame de coupe, et des espaces L entre ces rectangles indiquant les temps de passage sur les betteraves par le guide de la lame de coupe.

La stratégie adoptée est la suivante, illustrée par des lots de betteraves comprenant successivement en partant du côté gauche du dessin, un premier lot 70, un deuxième lot 72, un troisième lot 74, un quatrième lot 76 et un espace laissé vide 78.

Pour le lot 70, les betteraves 2 sont grosses et leur sommet est au niveau moyen du sol. Ces caractéristiques sont détectées par le capteur d'angle 40 du parallélogramme de la lame de coupe, et un temps de passage sur la betterave important. La hauteur relative H est augmentée de manière à être sûr de ne pas endommager la base de cette betterave.

Pour le lot 72, les betteraves sont grosses et ont grandi en dehors de la terre. Ces caractéristiques sont détectées par le capteur d'angle 40 du parallélogramme de la lame de coupe, et un temps de passage sur la betterave. La hauteur relative H est également importante, mais comme la hauteur du sommet des betteraves est élevée, l'unité de récolte sera relevée par rapport à sa position moyenne.

Dans le cas du lot 76, nous avons des petites betteraves, qui ont grandi relativement au-dessus du niveau du sol. L'unité de récolte sera donc relevée pour tenir compte d'une hauteur relative H faible et d'un sommet de la betterave qui est haut. Pour aucune betterave détectée, correspondant à une absence de détection par le capteur d'angle 40, la hauteur relative H est mise au minimum. Cette caractéristique est présentée par l'espace vide 78.

La figure 6 présente une surface de couleur noire correspondant à la différence de hauteur entre un niveau de récolte constant 90 utilisé par des machines de récolte selon l'art antérieur, et le niveau de récolte 8 optimisé avec le procédé suivant ce mode de réalisation. On constate à la fois une absence d'endommagement des betteraves 2, et un ajustement de ce niveau de récolte 8 au plus haut possible, traduisant une économie d'énergie pour la force de traction de la machine, et une moindre quantité de terre emportée inutilement.

En variante, l'ajustement de la hauteur relative H de l'unité de récolte 48 par rapport au niveau de coupe 10 peut être seulement fonction de la hauteur du sommet 4 de la racine 2 détectée par le moyen de détection.

Dans une telle configuration, chaque unité de coupe 36 comprend un guide et une lame de coupe montés sur un parallélogramme déformable muni d'un capteur d'angle 40, qui permet de mesurer la hauteur relative du guide lors de son passage sur la betterave 2, et donc la hauteur du sommet 4 de cette betterave. L'information est ensuite envoyée à l'unité de contrôle électronique 54 qui ajuste la hauteur relative H en fonction de la hauteur du sommet 4 de cette betterave afin d'obtenir un niveau de récolte 8 adaptée à chaque betterave 2 qui vient d'être coupée.

La stratégie adoptée dans ce cas est alors sensiblement similaire à celle précédemment décrite à la différence près que l'unité de contrôle électronique 54 procède à l'ajustement de la hauteur relative H seulement en fonction de la hauteur du sommet 4, comme si la taille de la racine était considérée constante.

De préférence, dans ce cas, le capteur d'angle 40 permet la mesure des hauteurs maximales correspondant aux hauteurs des sommets 4 des racines et des hauteurs minimales correspondant à des hauteurs sans racines, l'unité de contrôle électronique 54 comprenant un filtre permettant de lisser un déplacement de l'unité de récolte 48 en fonction d'une hauteur moyenne filtrée des sommets 4 des betteraves.

La figure 7 présente une courbe de niveau de coupe 10' donnée par le capteur d'angle 40, la courbe du niveau de récolte 8' optimisé avec le procédé suivant ce mode de réalisation correspondant au lissage de la courbe 10'. En d'autres termes, le procédé de fonctionnement de cette machine de récolte comporte une étape de lissage du déplacement de l'unité de récolte 48 en fonction d'une hauteur moyenne filtrée des sommets 4 des betteraves.

Une telle configuration est certes sensiblement moins précise que celle dans laquelle le moyen de détection détecte, en plus de la hauteur du sommet de la racine, la durée de passage du guide de coupe sur ce sommet, le moyen d'ajustement permettant d'ajuster la hauteur relative de l'unité de récolte par rapport au niveau de coupe en fonction de cette hauteur et de cette durée de passage sur le sommet. Toutefois, l'un des avantages de cette configuration et qu'il nécessite une consommation d'énergie, donc de carburant, un peu moindre.

## Revendications

1. Machine de récolte de racines plantées en terre (2) et alignées suivant des rangs, comprenant une unité de coupe horizontale de la tête des racines (36) disposant d'un moyen d'ajustement automatique du niveau de sa lame de coupe en fonction du niveau de cette tête, qui est suivie d'une unité de récolte (48) creusant la terre en dessous des racines à une hauteur relative (H) en dessous du niveau de coupe (12), comportant un moyen de détection de la hauteur du sommet (4) de la racine (2), **caractérisée en ce qu'**elle comporte un moyen d'ajustement de la hauteur relative (H) de l'unité de récolte (48) par rapport au niveau de coupe (12), en fonction de cette hauteur.

2. Machine de récolte selon la revendication 1, **caractérisée en ce que** le moyen de détection détecte, en plus de la hauteur du sommet (4) de la racine (2), la durée de passage (40) d'un guide de coupe sur ce sommet, le moyen d'ajustement permettant d'ajuster la hauteur relative (H) de l'unité de récolte (48) par rapport au niveau de coupe (12) en fonction de cette hauteur et de cette durée de passage sur le sommet.

3. Machine de récolte selon la revendication 2, **caractérisée en ce que** le moyen de détection de la durée de passage sur le sommet de la racine comporte un moyen qui détecte l'effort ou la déformation (40) du support de la lame de coupe de l'unité de coupe (36), qui est flexible.

4. Machine de récolte selon l'une quelconque des revendications précédentes, **caractérisée en ce que** la lame de l'unité de coupe (36) est montée sur un parallélogramme, donnant pendant le passage du guide de coupe sur la racine (2) un mouvement de ce parallélogramme qui est mesuré par un capteur d'angle (40).

5. Machine de récolte selon l'une quelconque des revendications précédentes, **caractérisée en ce que** le moyen d'ajustement de la hauteur relative (H) de l'unité de récolte (48) comporte un vérin hydraulique (50) piloté par une unité de contrôle électronique (54).

6. Machine de récolte selon l'une quelconque des revendications précédentes, **caractérisée en ce qu'**elle comporte un dispositif permettant au conducteur de prédéfinir pour chaque rang un niveau moyen de l'unité de récolte (48) avant son ajustage automatique par le moyen d'ajustement.

7. Machine de récolte selon la revendication 6, **caractérisée en ce que** chaque unité de récolte (48) comporte un capteur de hauteur (46).

8. Procédé de fonctionnement d'une machine de récolte de racines plantées en terre (2) et alignées suivant des rangs longitudinaux, comprenant une unité de coupe horizontale de la tête des racines (36) disposant d'un moyen d'ajustement automatique du niveau de sa lame de coupe en fonction du niveau de cette tête, qui est suivie d'une unité de récolte (48) creusant la terre en dessous des racines a une hauteur relative (H) en dessous du niveau de coupe (12), **caractérisé en ce qu'**il réalise une détection de la hauteur du sommet (4) de la racine (2), puis il ajuste la hauteur relative (H) de l'unité de récolte (48) par rapport au niveau de coupe (12), en fonction de cette hauteur.

9. Procédé de fonctionnement selon la revendication 8, **caractérisé en ce qu'**il comporte une étape de détection de la durée de passage sur la racine (2) par l'unité de coupe (36), la hauteur relative (H) de l'unité de récolte (48) par rapport au niveau de coupe (12) étant ajustée en fonction de cette durée de passage sur la racine.

10. Procédé de fonctionnement selon la revendication 8 ou 9, **caractérisé en ce qu'**il comporte une étape préliminaire de prédéfinition du niveau moyen de l'unité de récolte (48).

11. Procédé de fonctionnement selon la revendication 9 ou selon les revendications 9 et 10, **caractérisé en ce qu'**à partir de la hauteur relative moyenne (H), pour une durée de passage de l'unité de coupe sur la racine (2) importante il augmente cette hauteur relative, pour une durée moyenne il conserve cette hauteur relative, et pour une durée plus faible il réduit cette hauteur relative.

12. Procédé de fonctionnement selon l'une quelconque des revendications 8 à 11, **caractérisé en ce qu'**en l'absence de racine détectée, il met la hauteur relative (H) au minimum.

## Patentansprüche

1. Maschine zum Ernten von Wurzeln, die in die Erde (2) gepflanzt sind und in Reihen ausgerichtet sind, umfassend eine horizontale Schneideeinheit des Kopfes der Wurzeln (36), die über ein automatisches Einstellmittel der Ebene ihrer Schneideklinge in Abhängigkeit von der Ebene dieses Kopfes verfügt, gefolgt von einer Ernteeinheit (48), die den Boden unter den Wurzeln in einer relativen Höhe (H) unterhalb der Schneideebene (10) gräbt, umfassend ein Detektionsmittel der Höhe der Spitze (4) der Wurzel (2), **dadurch gekennzeichnet, dass** sie ein Einstellmittel der relativen Höhe (H) der Ernteeinheit (48) in Bezug auf die Schneideebene (10) in Abhängigkeit von dieser Höhe aufweist.

2. Erntemaschine nach Anspruch 1, **dadurch gekennzeichnet, dass** das Detektionsmittel neben der Höhe der Spitze (4) der Wurzel (2) die Passierdauer (40) einer Schneideführung über diese Spitze ermittelt, wobei das Einstellmittel erlaubt, die relative Höhe (H) der Ernteeinheit (48) in Bezug auf die Schneideebene (10) in Abhängigkeit von dieser Höhe und von dieser Passierdauer über die Spitze einzustellen.

3. Erntemaschine nach Anspruch 2, **dadurch gekennzeichnet, dass** das Detektionsmittel der Passierdauer über die Spitze der Wurzel ein Mittel aufweist, das die Kraft oder die Verformung (40) des Halters der Schneideklinge der Schneideeinheit (36), der flexibel ist, ermittelt.

4. Erntemaschine nach einem der vorangehenden Ansprüche, **dadurch gekennzeichnet, dass** die Klinge der Schneideeinheit (36) auf einem Parallelogramm montiert ist, wodurch es während der Passage der Schneideführung über die Wurzel (2) zu einer Bewegung dieses Parallelogramms kommt, die von einem Winkelsensor (40) gemessen wird.

5. Erntemaschine nach einem der vorangehenden Ansprüche, **dadurch gekennzeichnet, dass** das Einstellmittel der relativen Höhe (H) der Ernteeinheit (48) einen Hydraulikzylinder (50) aufweist, der von einer elektronischen Steuereinheit (54) gesteuert wird.

6. Erntemaschine nach einem der vorangehenden Ansprüche, **dadurch gekennzeichnet, dass** sie eine Vorrichtung aufweist, die dem Fahrer erlaubt, für jede Reihe eine mittlere Ebene der Ernteeinheit (48) vor ihrer automatischen Einstellung durch das Einstellmittel vorher festzulegen.

7. Erntemaschine nach Anspruch 6, **dadurch gekennzeichnet, dass** jede Ernteeinheit (48) einen Höhensensor (46) aufweist.

8. Funktionsverfahren einer Maschine zum Ernten von Wurzeln, die in die Erde (2) gepflanzt wurden und in länglichen Reihen ausgerichtet sind, umfassend eine horizontale Schneideeinheit des Kopfes der Wurzeln (36), die über ein automatisches Einstellmittel der Ebene ihrer Schneideklinge in Abhängigkeit von der Ebene dieses Kopfes verfügt, gefolgt von einer Ernteeinheit (48), die den Boden unter den Wurzeln in einer relativen Höhe (H) unterhalb der Schneideebene (10) gräbt, **dadurch gekennzeichnet, dass** es eine Detektion der Höhe der Spitze (4) der Wurzel (2) durchführt und dann die relative Höhe (H) der Ernteeinheit (48) in Bezug auf die Schneideebene (10) in Abhängigkeit von dieser Höhe einstellt.

9. Funktionsverfahren nach Anspruch 8, **dadurch gekennzeichnet, dass** es einen Detektionsschritt der Passierdauer der Schneideeinheit (36) über die Wurzel (2) aufweist, wobei die relative Höhe (H) der Ernteeinheit (48) in Bezug auf die Schneideebene (10) in Abhängigkeit von dieser Passierdauer über die Wurzel eingestellt wird.

10. Funktionsverfahren nach Anspruch 8 oder 9, **dadurch gekennzeichnet, dass** es einen vorherigen Schritt der vorherigen Definition der mittleren Ebene der Ernteeinheit (48) aufweist.

11. Funktionsverfahren nach Anspruch 9 oder nach Anspruch 9 und 10, **dadurch gekennzeichnet, dass**, ausgehend von der durchschnittlichen relativen Höhe (H), bei einer langen Passierdauer über die Wurzel, diese relative Höhe, bei einer durchschnittlichen Dauer diese relative Höhe beibehalten wird, und bei einer kurzen Dauer diese relative Höhe reduziert wird.

12. Funktionsverfahren nach einem der Ansprüche 8 bis 11, **dadurch gekennzeichnet, dass** bei keiner detektierten Wurzel die relative Höhe (H) auf Minimum gesetzt wird.

## Claims

1. Machine for harvesting roots (2) planted in earth and arranged in rows, comprising a unit for the horizontal cutting of the root head (36) and with means for automatically adjusting the level of the cutting blade as a function of the level of the root head, which is followed by a harvesting unit (48) that digs the soil below the roots at a relative height (H) below the cutting level (12) and comprises a means for detecting the height of the top (4) of the root (2), **characterized in that** it comprises means for adjusting the relative height (H) of the harvesting unit (48) with respect to the cutting level (12) as a function of this height.

2. Harvesting machine according to claim 1, **characterized in that** the detecting means detects, in addition to the height of the top (4) of the root (2), the duration of the passage (40) of a cutting guide over this top, the adjustment means adjusting the relative height (H) of the harvesting unit (48) with respect to the cutting level (12) as a function of this height and of this duration of the passage over the top.

3. Harvesting machine according to claim 2, **characterized in that** the means for detecting the duration of the passage over the top of the root comprises means to detect the force or deformation (40) of the support of the cutting blade of the cutting unit (36), which is flexible.

4. Harvesting machine according to any one of the preceding claims, **characterized in that** the blade of the cutting unit (36) is mounted on a parallelogram, and gives a movement of this parallelogram which is measured by an angle sensor (40) during the passage of the cutting guide over the root (2).

5. Harvesting machine according to any one of the preceding claims, **characterized in that** the means for adjusting the relative height (H) of the harvesting unit (48) comprises a hydraulic cylinder (50) that is controlled by an electronic control unit (54).

6. Harvesting machine according to any one of the preceding claims, **characterized in that** it comprises a device allowing the driver to predefine an average level of the harvesting unit (48) for each row before its automatic adjustment by the adjustment means.

7. Harvesting machine according to claim 6, **characterized in that** each harvesting unit (48) comprises a height sensor (46).

8. Method of operation of a machine for harvesting roots planted in the earth (2) and arranged in longitudinal rows, comprising a unit for the horizontal cutting of the root head (36) and comprising a means for automatic adjustment of the level of the cutting blade as a function of the level of this head, and which is followed by a harvesting unit (48) that digs the soil below the roots at a relative height (H) below the cutting level (12), **characterized in that** it detects the height of the top (4) of the root (2), and then adjusts the relative height (H) of the harvesting unit (48) with respect to the cutting level (12) as a function of this height.

9. Operating method according to claim 8, **characterized in that** it comprises a step of detecting the duration of passage of the cutting unit (36) over the root (2), wherein the relative height (H) of the harvesting unit (48) is adjusted with respect to the cutting level (12) as a function of this time of passage over the root.

10. Operating method according to claim 8 or 9, **characterized in that** it comprises a preliminary step of predefining the average level of the harvesting unit (48).

11. Operating method according to claim 9 or according to claims 9 and 10, **characterized in that** starting from the average relative height (H), it increases this relative height for a significant duration of the passage of the cutting unit over the root (2), while it retains this relative height for an average duration, and it reduces this relative height for a shorter duration.

12. Operating method according to any one of the claims 8 to 11, **characterized in that** in the absence of detection of a root, it reduces the relative height (H) to a minimum.
